# EUROPÄISCHE PATENTSCHRIFT

(11) **EP 2 920 079 B1**
(45) Veröffentlichungstag und Bekanntmachung des Hinweises auf die Patenterteilung: **11.01.2017**
(21) Anmeldenummer: 13802532.5
(22) Anmeldetag: 13.11.2013
(51) Int. Cl.: B65B 43/46, B65B 43/60, B65B 39/00, B65B 39/08, B65B 43/30, B65B 43/50, B65B 61/28, B65B 65/02, B65G 47/86, B65B 1/04, B65B 1/08, B65B 9/00

(54) **VORRICHTUNG ZUM VERARBEITEN VON OFFENEN SÄCKEN**
DEVICE FOR PROCESSING OPEN BAGS
DISPOSITIF DE TRAITEMENT DE SACS OUVERTS

(30) Priorität: 14.11.2012 DE 102012022224
(43) Veröffentlichungstag der Anmeldung: 23.09.2015
(73) Patentinhaber: Haver & Boecker OHG, 59302 Oelde (DE)
(72) Erfinder: VOLLENKEMPER, Willi, 59302 Oelde (DE)
(74) Vertreter: BSB Intellectual Property Law
(86) Internationale Anmeldenummer: PCT/EP2013/003408
(87) Internationale Veröffentlichungsnummer: WO 2014/075793

(56) Entgegenhaltungen:
- EP-A1- 2 100 813
- WO-A1-2004/014729
- CN-U- 201 721 647
- US-A- 3 961 461

## Beschreibung

Die vorliegende Erfindung betrifft eine Vorrichtung zum Verarbeiten von offenen Säcken, wobei eine Handlingeinrichtung vorgesehen ist, um offene Säcke mit einer rotierbaren Packmaschine auszutauschen. Die Packmaschine kann zur Abfüllung von Schüttgütern aller Art vorgesehen sein. Besonders bevorzugt wird eine Vorrichtung gemäß der Erfindung aber bei der Abfüllung von Feinprodukten eingesetzt, also bei der Abfüllung von feinen und staubenden Produkten, die eine entsprechend lange Füll- und insbesondere Verdichtungszeit benötigen. Die Vorrichtung gemäß der Erfindung kann eine solche rotierbare Packmaschine umfassen.

Im Stand der Technik sind verschiedenste Packmaschinen zum Füllen von offenen Säcken bekannt geworden. Beispielsweise werden oftmals sogenannte FFS-Packmaschinen ("Form-Fill-Seal-Packmaschinen") eingesetzt, um Schüttgut in offene Säcke abzufüllen. Bei solchen FFS-Packanlagen wird der offene Sack innerhalb der Maschine oder in einer direkt vorgelagerten Einrichtung gefertigt. Der Maschine wird eine Folienschlauchrolle zugeordnet, aus der während des Betriebes fortlaufend die benötigten offenen Säcke hergestellt werden. Ein Vorteil solcher FFS-Packmaschinen besteht darin, dass die offenen Säcke in ihrer tatsächlich benötigten Länge hergestellt werden können. Es muss nicht auf vorkonfektionierte und somit teurere Säcke zurückgegriffen werden.

FFS-Packmaschinen verarbeiten offene Säcke aus Kunststofffolie, die wasserdicht ausgeführt sein können. Deshalb können mit feuchtigkeitsempfindlichen Materialien - wie beispielsweise Zement - gefüllte offene Säcke nach dem Verschließen auch im Freien gelagert werden, da der Inhalt zuverlässig vor Feuchtigkeit geschützt aufgenommen ist.

Zur Erhöhung der Abfüllrate sind Packmaschinen zur Füllung von offenen Säcken bekannt geworden, die rotierbar ausgeführt sind und die über den Umfang verteilt mehrere Füllstutzen aufweisen, an die offene Säcke zur Füllung angehangen werden. Um ein sicheres Anhängen der Säcke an die Füllstutzen zu gewährleisten, wird eine bekannte Packmaschine zum Füllen von offenen Säcken mit vier Füllstutzen in getakteter Betriebsweise jeweils um 90° rotiert und dann gestoppt. Im stehenden Zustand wird der offene Sack von unten an den Füllstutzen angehangen, während bei dem nächsten Füllstutzen schon der Füllvorgang erfolgt. Durch den getakteten Betrieb einer solchen rotierbaren Packmaschine wird eine längere Verdichtungszeit ermöglicht. Während nämlich an dem ersten Füllstutzen ein offener Sack angehangen wird, kann an anderen Füllstutzen der Füllvorgang schon durchgeführt werden, während gleichzeitig auf die schon teilweise gefüllten offenen Säcke Verdichtungseinrichtungen einwirken, um den Produktspiegel abzusenken und um das abgefüllte Schüttgut zu entlüften. Durch das Absenken des Produktspiegels kann die Sacklänge reduziert werden, was Kosten einspart. Außerdem sind verdichtete Säcke nach dem Verschließen optisch ansprechender als Säcke, die noch größere Mengen überschüssiger Luft enthalten.

Um einen hohen Durchsatz bei der Abfüllung von Schüttgütern in offene Säcke zu erzielen, werden die zu füllenden offenen Säcke auf den Füllstutzen automatisch aufgesteckt und nach dem Füllvorgang automatisch abgenommen. Beim Aufstecken wird von unten ein vorgeöffneter offener Sack durch eine Schwenkbewegung eines Pendelgreifers aufgesteckt. Ein solches Aufstecken funktioniert bei stationären Anlagen zuverlässig. Grundsätzlich ist das auch bei getakteten rotierenden Anlagen möglich, da die Füllstutzen während des Aufsteckens stationär sind. Wird eine Packmaschine allerdings kontinuierlich rotierend ausgeführt, so reicht der kurze Zeitpunkt des Vorbeirotierens bei solchen Sackaufsteckern nicht aus, um den vorgeöffneten offenen Sack an den Füllstutzen anzuhängen. Das liegt unter anderem an dem für die offenen Säcke verwendeten Folienmaterial, welches keine genügende Eigensteifigkeit aufweist, um bei den vorhandenen und nötigen Verarbeitungsgeschwindigkeiten eine ausreichende Formstabilität zu gewährleisten.

Im Stand der Technik sind auch Packmaschinen zum Füllen von offenen Säcken bekannt geworden, die rotierend ausgeführt sind. Dabei erfolgt die Übergabe der zu füllenden offenen Säcke an die rotierende Packmaschine durch Pendelgreifer, die den flach hängenden Leersack an mitrotierende Greifer der Packmaschine übergeben. An jeder Fülleinheit der Packmaschine ist ein Sacköffner vorgesehen, der die aufeinander aufliegenden oberen Sackwandungen öffnet und eine dem Füllstutzen angepasste Öffnung in die obere Sackwandung einbringt. Eine solche Packmaschine funktioniert grundsätzlich, ist aber sehr aufwendig, da für jeden einzelnen Füllstutzen eine separate Sacköffnungseinrichtung vorgesehen sein muss.

Für das Füllen von Schüttgütern in Ventilsäcke sind Packmaschinen bekannt geworden, bei denen die Packmaschinen rotierend ausgeführt sind und bei denen die zu füllenden Ventilsäcke während der Rotation der Packmaschine auf die Füllstutzen aufgeschossen werden. Ventilsäcke haben im Vergleich zu offenen Säcken eine wesentlich kleinere Einfüllöffnung und umfassen meist wenigstens eine Papierlage, die für eine hohe Steifigkeit des Ventilsacks und insbesondere des Ventils sorgt. Bei rotierenden Ventilsackpackmaschinen stehen die Füllstutzen zudem etwa waagerecht radial nach außen ab und die Ventile der Ventilsäcke werden radial von außen auf die horizontal ausgerichteten Füllstutzen aufgeschossen. Dabei überbrücken die Ventilsäcke während des Aufsteck- bzw. Aufschiebevorganges einen radialen Abstand zwischen dem Sackaufschießer und dem Füllstutzen im freien Flug. Dadurch wird eine Kollision des feststehenden Sackaufschießers mit dem rotierenden Teil der Anlage vermieden. Dieses Verfahren funktioniert bei Ventilsäcken zuverlässig, da Ventilsäcke eine relativ hohe Eigensteifigkeit aufweisen und da das Sackventil nur eine geringe Querschnittsöffnung aufweist, sodass Ventilsäcke eine ausreichende Stabilität für die im freien Flug zu überbrückende Distanz aufweisen.

Offene Säcke hingegen sind - wie der Name schon sagt - oben offen ausgebildet. Die verwendeten Füllstutzen weisen zudem einen erheblich größeren Querschnitt auf. Da Offensäcke zudem meist aus sehr flexiblen Folienmaterialien bestehen, muss die beim Aufstecken benötigte Sacköffnung während des Aufsteckvorgangs definiert gehalten werden, um eine definierte Übergabe des zu füllenden offenen Sacks und einen genau definierten Sitz des offenen Sacks an dem Füllstutzen zu gewährleisten. Die Überbrückung auch eines relativ geringen Abstandes im freien Flug ist bei dem Aufstecken von offenen Säcken auf einen Füllstutzen deshalb ohne Weiteres nicht möglich.

Außerdem wird beim Füllen von feinen Schüttgütern in offene Säcke regelmäßig eine Rüttelplatte eingesetzt, auf der der Boden des offenen Sackes während des Füllvorgangs aufliegt. Dadurch kann ein lineares Aufstecken auf einen Füllstutzen einer offenen Sackmaschine nicht ohne Weiteres von unten erfolgen, da die Rüttelplatte genau unterhalb des Füllstutzens angeordnet ist.

In analoger Weise ist auch bei der Abnahme von gefüllten offenen Säcken eine entsprechende Automatisierung gewünscht, unterliegt aber ebenso größeren Anforderungen als bei der Abnahme von Ventilsäcken.

Es ist deshalb die Aufgabe der vorliegenden Erfindung, eine Vorrichtung zum Verarbeiten von offenen Säcken zur Verfügung zu stellen, welche eine Handlingeinrichtung umfasst, um offene Säcke mit einer rotierbaren Packmaschine auszutauschen, wobei ein hoher Durchsatz auch bei der Abfüllung von feinen Schüttgütern möglich sein soll.

Diese Aufgabe wird gelöst durch eine Vorrichtung mit den Merkmalen des Anspruchs 1. Bevorzugte Weiterbildungen sind Gegenstand der Unteransprüche. Weitere Vorteile und Merkmale der vorliegenden Erfindung ergeben sich aus der allgemeinen Beschreibung und der Beschreibung des Ausführungsbeispiels.

Die erfindungsgemäße Vorrichtung zum Verarbeiten von offenen Säcken umfasst eine Handlingeinrichtung, um offene Säcke mit einer rotierbaren Packmaschine auszutauschen. Dabei weist die Handlingeinrichtung wenigstens eine um eine Drehachse der Handlingeinrichtung umlaufende Dreheinrichtung auf, an der wenigstens zwei Greifarme zum Greifen der offenen Säcke angeordnet sind. Die wenigstens zwei Greifarme sind getrennt voneinander und im Wesentlichen quer zu der Drehachse der Dreheinrichtung längsbeweglich angeordnet, um zusätzlich zu der Umlaufbewegung um die Handlingeinrichtung herum eine Längsbewegung der Greifarme gegenüber der Dreheinrichtung zu ermöglichen.

Die erfindungsgemäße Vorrichtung hat viele Vorteile. Die erfindungsgemäße Vorrichtung ermöglicht den Austausch von zu füllenden offenen Säcken mit einer rotierbaren Packmaschine mit mehreren Füllstutzen. Die Handlingeinrichtung ist mit einer Dreheinrichtung versehen, an der wenigstens zwei, drei oder mehr Greifarme vorgesehen sind. Dadurch kann die Handlingeinrichtung effektiv offene Säcke mit der rotierbaren Packmaschine austauschen. Um die Bewegung der Greifarme der Handlingeinrichtung an die Bewegung der rotierbaren Packmaschine anzupassen, sind die Greifarme in Längsrichtung beweglich an der Dreheinrichtung angeordnet. Das bedeutet, dass die Handlingeinrichtung insgesamt beispielsweise stationär vorgesehen sein kann. Gegebenenfalls ist die Position der Handlingeinrichtung einstellbar.

Die erfindungsgemäße Vorrichtung ermöglicht einen zuverlässigen Austausch auch von Offensäcken aus flexiblen Folienmaterialien.

Die an der Handlingeinrichtung vorgesehene umlaufende Dreheinrichtung verfügt über wenigstens zwei Greifarme, die zum Austausch von offenen Säcken mit der rotierbaren Packmaschine dienen. Die beiden Greifarme sind getrennt voneinander längsbeweglich angeordnet, um eine synchrone Bewegung mit der rotierbaren Packmaschine wenigstens zeitweise zu ermöglichen.

In allen Ausgestaltungen werden vorzugsweise offene Säcke verarbeitet, die nach dem Füllen ein Gewicht von 4 kg bis 60 kg und insbesondere zwischen etwa 10 und etwa 50 kg aufweisen. Die zu verarbeitenden offenen Säcke sind keine Standbodenbeutel und sind in der Regel nach der Füllung nicht auf ihrem schmalen Ende standfest.

Insbesondere sind die Greifarme in wenigstens einer Ebene quer zu der Drehachse und insbesondere in etwa einer horizontalen Ebene längsbeweglich. Dabei kann eine leichte Neigung zur Horizontalen vorliegen. Vorzugsweise ist wenigstens eine Antriebseinrichtung für die Längsbewegung wenigstens eines Greifarmes vorgesehen. Es ist möglich und bevorzugt, dass die Antriebseinrichtung für die insbesondere voneinander separate oder unabhängige Längsbewegung von zwei oder mehr Greifarmen vorgesehen ist. Möglich ist es aber auch, dass jedem Greifarm eine separate Antriebseinrichtung zugeordnet ist.

Besonders bevorzugt ist die Antriebseinrichtung über wenigstens eine Koppeleinrichtung an wenigstens eine Bewegungseinrichtung zur Längsbewegung des Greifarms ankoppelbar. Insbesondere ist die Koppeleinrichtung zwangsgesteuert oder separat ansteuerbar. Eine Koppeleinrichtung, mit der eine Bewegungseinrichtung an die Antriebseinrichtung gezielt koppelbar ist, ermöglicht einen einfacheren Aufbau, da für zwei oder alle Greifarme nur eine einzige Antriebseinrichtung vorgesehen sein muss.

Obwohl nur eine Antriebseinrichtung in Form eines Elektromotors, eines Synchronmotors, eines Elektrozylinders oder eines positionsgesteuerten Hydraulik- oder Pneumatikzylinders vorgesehen ist, kann über die Koppeleinrichtung gezielt eine voneinander getrennte Längsbewegung der Greifarme ermöglicht werden. Dadurch wird ein geringerer Aufwand an der Dreheinrichtung ermöglicht, da weniger Antriebe und Steuer- und Versorgungsleitungen zu der Dreheinrichtung geführt werden müssen.

Es ist deshalb bevorzugt, dass die Koppeleinrichtung dazu ausgebildet ist, die Antriebseinrichtung an wenigstens zwei unterschiedliche Bewegungseinrichtungen anzukoppeln. Hierdurch kann eine voneinander getrennte Längsbewegung wenigstens zweier unterschiedlicher Greifarme ermöglicht werden.

Vorzugsweise umfasst wenigstens eine Bewegungseinrichtung einen Riemenantrieb. Möglich ist auch eine andere Art von Längsantrieb, wobei vorzugsweise eine Drehbewegung in eine Längsbewegung umgesetzt wird.

Vorzugsweise sind wenigstens zwei separate Längsführungen an der Dreheinrichtung vorgesehen, der jeweils ein Greifer zugeordnet ist. Eine solche Längsführung kann insbesondere als Linearführung ausgebildet sein.

Vorzugsweise umfasst wenigstens eine Längsführung eine Kurvenführung, an welcher der Greifarm längsbeweglich geführt wird. Über eine Kurvenführung kann der Greifarm bei dem Austausch eines offenen Sacks relativ zu der rotierbaren Packmaschine bzw. den Füllstutzen während der Längsbewegung kontinuierlich definiert ausgerichtet werden, um die zur Verfügung stehende Austauschzeit zu vergrößern.

Vorzugsweise verfügt wenigstens ein Greifarm über wenigstens zwei Halteeinheiten, um die offenen Säcke jeweils an zwei voneinander beabstandeten Orten des offenen Sacks zu halten. Beispielsweise kann ein offener Sack an den oberen Ecken gehalten, gegriffen oder geklemmt werden. Beispielsweise können zwei Greiferpaare als Halteeinheiten vorgesehen sein, mit denen der offene Sack an zwei voneinander beabstandeten Orten ergriffen wird. Als Halteeinheiten können beispielsweise neben Greifern und Klemmbacken auch Sauger eingesetzt werden, die jeweils z. B. paarweise eine Halteeinheit ergeben.

In besonders bevorzugten Ausgestaltungen umfasst die Vorrichtung eine rotierbare Packmaschine zum Füllen von offenen Säcken, wobei die rotierbare Packmaschine mit mehreren über den Umfang verteilt angeordneten mitrotierenden Fülleinheiten ausgerüstet ist. Jede Fülleinheit weist jeweils einen Füllstutzen mit einer unteren Füllöffnung auf, wobei durch eine relativ zum Füllstutzen gerichtete Aufwärtsbewegung die offenen Säcke an die Füllstutzen anhängbar sind.

Besonders bevorzugt werden die offenen Säcke an die Füllstutzen dicht angelegt und vor der Füllung dort insbesondere abgedichtet, um den Austritt von Staub bei der Abfüllung zu reduzieren oder zu vermeiden.

Vorzugsweise sind die offenen Säcke mit ihrem oberen Ende etwa tangential zu dem Umfang der Packmaschine ausgerichtet. Dann können auf beiden Seiten des Füllstutzens die oberen Ecken oder Kanten ergriffen werden, um den offenen Sack anzuhängen oder abzunehmen.

In bevorzugten Weiterbildungen ist eine Längsgeschwindigkeit der Längsbewegung des Greifarms wenigstens zeitweise an eine Umfangsgeschwindigkeit der Umfangsbewegung der Füllstutzen angepasst. Vorzugsweise ist der Greifarm wenigstens abschnittsweise linear und/oder bogenförmig bewegbar an der Handlingeinrichtung angeordnet.

In vorteilhaften Weiterbildungen entspricht ein Verlauf der Kurvenführung im Wesentlichen einem Kreisbogen oder Kreissegment, dessen Mittelpunkt im Wesentlichen einer Drehachse der rotierbaren Packmaschine entspricht. Insbesondere beträgt ein Abstand des Mittelpunkts des Kreisbogens von dem Drehpunkt der rotierbaren Packmaschine weniger als 1/4 und insbesondere weniger als 1/8 und vorzugsweise weniger als 1/10 des Durchmessers der rotierbaren Packmaschine. Mit einer kleineren Abweichung kann eine bessere Übereinstimmung bei dem Austausch erzielt werden.

Der Radius des Kreisbogens entspricht vorzugsweise dem Abstand des Kreisbogens von der Drehachse der rotierbaren Packmaschine. Wird ein Greifarm entlang einer Kurvenführung bewegt, die durch einen Kreisbogen beschrieben werden kann, so verläuft der Greifarm exakt ausgerichtet zu den an dem Außenumfang der Packmaschine vorgesehenen Füllstutzen. Dadurch kann eine entsprechend lange Übergabezeit ermöglicht werden.

Vorzugsweise rotieren die Handlingeinrichtung und die rotierbare Packmaschine gegensinnig. Besonders bevorzugt erfolgt die Längsbewegung des Greifarms beim Anhängen gleichsinnig mit der Umfangsbewegung des Füllstutzens.

Besonders bevorzugt ist die Handlingeinrichtung zur Übergabe zu füllender offener Säcke an eine rotierbare Packmaschine vorgesehen. Vorzugsweise ist wenigstens eine Sacköffnungseinrichtung vorgesehen. Dabei ist es möglich, dass die Sacköffnungseinrichtung der Handlingeinrichtung vorgelagert ist und einen schon geöffneten offenen Sack an die Handlingeinrichtung übergibt. Möglich ist es aber auch, dass wenigstens eine Sacköffnungseinrichtung mitrotierend an der Handlingeinrichtung vorgesehen ist. Insbesondere ist die Sacköffnungseinrichtung dann an der Dreheinrichtung vorgesehen. Wenn eine Sacköffnungseinrichtung an einem Greifarm angeordnet ist, kann die Sacköffnungseinrichtung auch während der Drehbewegung oder in beliebigen Winkelpositionen den offenen Sack öffnen.

In allen Ausgestaltungen ist es auch bevorzugt, dass wenigstens eine Handlingeinrichtung zur Abnahme gefüllter offener Säcke von der rotierbaren Packmaschine vorgesehen ist.

In allen Ausgestaltungen erfolgt eine Drehung der Dreheinrichtung vorzugsweise getaktet. Besonders bevorzugt dreht die rotierbare Packmaschine kontinuierlich. Die Drehbewegungen der Dreheinrichtung und der rotierbaren Packmaschine sind insbesondere synchronisiert oder aufeinander abgestimmt.

Es ist möglich und bevorzugt, dass wenigstens ein Greifarm höhenbeweglich ist. Möglich ist es auch, dass der Füllstutzen zum Anhängen oder zum Abnehmen höhenverstellbar ist.

Die Halteeinheit wenigstens eines Greifarms und/oder der Greifarm kann durch eine Höhenverschwenkung des Greifarms höhenverstellbar sein.

Die erfindungsgemäße Vorrichtung dient zum Verarbeiten von offenen Säcken, wobei eine Handlingeinrichtung vorgesehen ist, um offene Säcke mit einer rotierbaren Packmaschine auszutauschen. Die Handlingeinrichtung weist eine um die Drehachse der Handlingeinrichtung umlaufende Dreheinrichtung auf, an der wenigstens zwei Greifarme zum Greifen der offenen Säcke angeordnet sind. Wenigstens zwei Greifarme werden getrennt voneinander und im Wesentlichen quer zu der Drehachse der Dreheinrichtung in Längsrichtung bewegt bzw. können entsprechend bewegt werden, um zusätzlich zu der Umlaufbewegung um die Handlingeinrichtung herum eine voneinander getrennte Längsbewegung der Greifarme gegenüber der Dreheinrichtung zu ermöglichen.

Die Erfindung hat viele Vorteile, da sie eine flexible Betriebsweise ermöglicht. Dadurch, dass die beiden Greifarme voneinander unabhängig längsbeweglich angeordnet sind, können bei der Übergabe eines offenen Sacks an die Handlingeinrichtung oder bei der Übergabe eines offenen Sacks von der Handlingeinrichtung an eine rotierbare Packmaschine jeweils eine entsprechend angepasste Übergabezeit ermöglicht werden.

Vorzugsweise ist wenigstens ein Greifarm wenigstens zeitweise in Längsrichtung unbeweglich. Möglich ist es, dass ein Greifarm verfahren wird, während der andere unbeweglich ist. Möglich ist es auch, dass ein Greifarm schnell verfahren wird, während der andere Greifarm nahezu stillsteht oder aber langsam verfahren wird.

In allen Ausgestaltungen werden die Drehbewegungen der Dreheinrichtung und der rotierbaren Packmaschine vorzugsweise zueinander aufeinander abgestimmt. Die Längsbewegung der Greifarme wird mit der Drehbewegung der Packmaschine synchronisiert.

Dabei wird die Dreheinrichtung vorzugsweise getaktet rotiert. An wenigstens einer vorbestimmten Winkelposition erfolgt bei einem Stillstand der Dreheinrichtung eine Längsbewegung wenigstens eines Greifarms und insbesondere genau eines Greifarms.

Dabei wird der Greifarm in einem Bereich der vorbestimmten Winkelposition vor und wieder zurückbewegt, bevor die Dreheinrichtung die nächste Winkelposition erreicht oder aber sogar weiter rotiert wird.

Insgesamt stellt die vorliegende Erfindung eine vorteilhafte Vorrichtung zum Verarbeiten von offenen Säcken zur Verfügung, womit die Verarbeitungsgeschwindigkeit erhöht werden kann, während gleichzeitig ein zuverlässiger Betrieb gewährleistet wird.

Weitere Vorteile und Merkmale der vorliegenden Erfindung ergeben sich aus dem Ausführungsbeispiel, welches im Folgenden mit Bezug auf die vorliegenden Figuren erläutert wird.

In den Figuren zeigen:
- Fig. 1: eine schematische Draufsicht auf eine erfindungsgemäße Packmaschine;
- Fig. 2: eine Seitenansicht der Packmaschine nach Fig. 1;
- Fig. 3: eine Seitenansicht einer Handlingeinheit in einer ersten Stellung;
- Fig. 4: die Handlingeinheit aus Fig. 3 in einer zweiten Stellung;
- Fig. 5: die Handlingeinheit aus Fig. 4 in einer perspektivischen Darstellung;
- Fig. 6: die Handlingeinheit aus Fig. 4 in einer Draufsicht in einer ersten Position;
- Fig. 7: die Handlingeinheit aus Fig. 6 in einer zweiten Position;
- Fig. 8: die Handlingeinheit aus Fig. 6 in einer dritten Position;
- Fig. 9: die Handlingeinheit aus Fig. 6 in einer vierten Position;
- Fig. 10: die Handlingeinheit aus Fig. 6 in einer fünften Position;
- Fig. 11: die Handlingeinheit aus Fig. 6 in einer sechsten Position;
- Fig. 12: die Handlingeinheit aus Fig. 6 in einer weiteren Winkelposition;
- Fig. 13: eine Draufsicht auf einen Ausschnitt der Handlingeinrichtung, wobei die Kurvenführung sichtbar ist; und
- Fig. 14: die Koppeleinrichtung für die Handlingeinrichtung nach Fig. 3 in zwei unterschiedlichen Stellungen.

Mit Bezug auf die beiliegenden Figuren wird im Folgenden ein Ausführungsbeispiel einer erfindungsgemäßen Vorrichtung 100 erläutert, welche hier Handlingeinrichtungen 40 und 50 und eine rotierbare Packmaschine 1 umfasst.

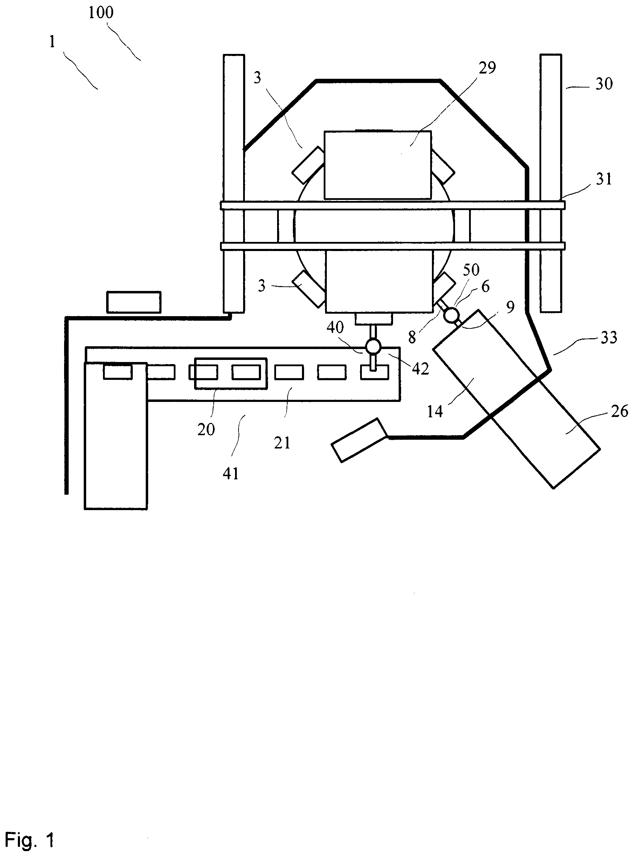

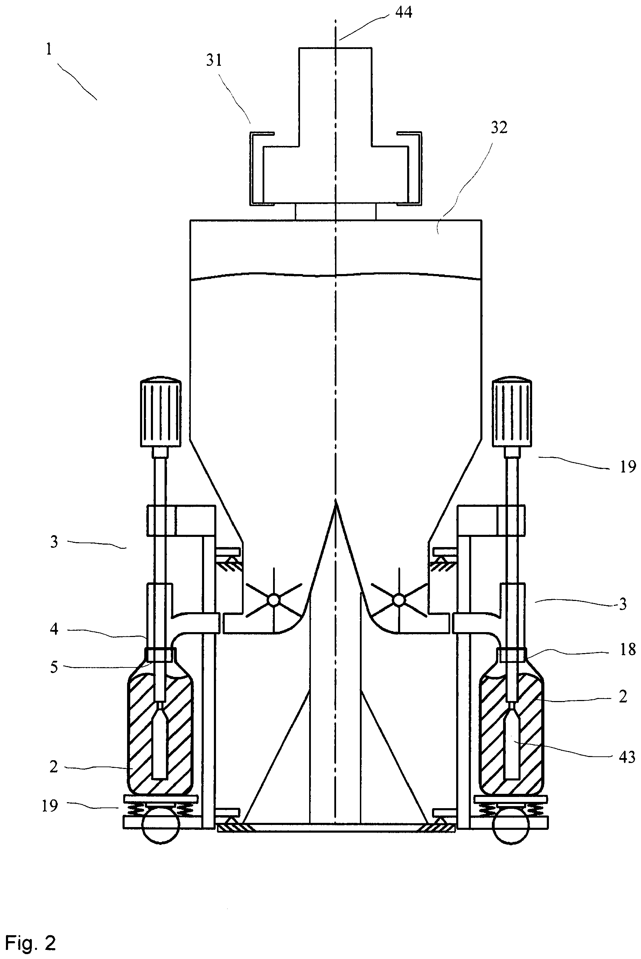

Die Vorrichtung 100 ist in Fig. 1 in einer schematischen Draufsicht abgebildet. Die rotierbare Packmaschine 1 dient zum Füllen von offenen Säcken 2 (vgl. Fig. 2) und verfügt über eine Mehrzahl von Fülleinheiten 3, die hier jeweils mit einem Füllstutzen 4 ausgerüstet sind. An der hier dargestellten Packmaschine 1 können zwischen etwa zwei und sechzehn Fülleinheiten 3 angeordnet werden. Grundsätzlich ist es aber auch möglich, noch mehr Fülleinheiten an einer rotierbaren Packmaschine 1 anzubauen.

Die rotierbare Packmaschine 1 wird kontinuierlich rotierend betrieben, sodass die Fülleinheiten 3 mit im Wesentlichen konstanter Geschwindigkeit um eine zentrale Achse 44 drehen. Die Geschwindigkeit hängt insbesondere von dem abzufüllenden Produkt und dessen Verdichtungsverhalten ab. Das abzufüllende Material wird über einen Einlauftrichter 29 und ein Silo 32 den einzelnen Füllstutzen 4 der Fülleinheiten 3 zugeführt.

Die Füllstutzen 4 zur Befüllung der offenen Säcke 2 sind hier vertikal ausgerichtet, sodass die einzige Füllöffnung 5 senkrecht nach unten zeigt. Es ist aber auch möglich, dass eine oder mehrere Füllöffnungen zur Senkrechten geneigt ausgerichtet ist bzw. sind. Beispielsweise kann ein Winkel von fünf Grad, zehn Grad oder auch zwanzig Grad zur Senkrechten vorgesehen sein. Offene Säcke 2, die auch als Offensäcke 2 bezeichnet werden, werden von unten an die untere Füllöffnung 5 der Füllstutzen 4 angehängt.

Dazu wird ein offener Sack 2 ergriffen und die obere Sackwandung 18 geöffnet, sodass die obere Sacköffnung 35 entsteht. Es werden vorzugsweise Sauger und Greifer und/oder Klemmbacken verwendet, sodass eine der Querschnittsform des Füllstutzens 4 entsprechende Sacköffnung 35 an dem oberen Ende des Offensacks 2 entsteht. Der offene Sack 2 wird mit seiner oberen Sackwandung 18 durch Halteelemente wie z. B. Sauger und/oder Greifer definiert gehalten, bis der offene Sack 2 auf den Füllstutzen 4 aufgeschoben ist und dort durch hier nicht dargestellte Halteelemente wie Greifer und Klemmbacken wiederum definiert gehalten wird.

Das Aufstecken der offenen Säcke 2 erfolgt mit einer Übergabeeinrichtung 6 als Handlingeinrichtung 50, die einer Sackbildungseinrichtung 26 nachgeschaltet ist. In der Sackbildungseinrichtung 26 werden hier aus einer Schlauchfolie die einzelnen Offensäcke 2 während des kontinuierlichen Betriebs hergestellt. Dazu wird von der Schlauchfolie jeweils eine entsprechende Länge abgeschnitten und die Bodennaht in den Offensack 2 eingefügt. Es können aber auch vorgefertigte bzw. vorkonfektionierte offene Säcke 2 aus einem Magazin verwendet werden.

Während der Rotation in die Drehrichtung 28, die hier entgegen dem Uhrzeigersinn erfolgt, werden die offenen Säcke 2 gefüllt. Bei anderen Anlagenkonfigurationen ist eine Rotation im Uhrzeigersinn möglich. Gleichzeitig wird über die Verdichtungseinrichtungen 19 in Form von Vibrationseinrichtungen oder Rütteleinrichtungen 43, die an jeder Fülleinheit 3 höhenverstellbar vorgesehen sind, eine Verdichtung des Produktes erzielt, wodurch der Produktspiegel reduziert wird. Durch die Verdichtung des Produkts werden insgesamt kürzere offene Säcke 2 benötigt und es wird ein prall gefüllter offener Sack 2 hergestellt, der nicht nur wenig Folienmaterial benötigt, sondern auch optisch ansprechend aussieht.

Die zur Herstellung der offenen Säcke 2 - im Vergleich zu Säcken aus Papier - verwendete Folie führt dazu, dass die offenen Säcke 2 eine relativ geringe Eigensteifigkeit aufweisen. Damit muss jederzeit eine genau definierte Führung der offenen Säcke 2 gewährleistet sein, um relativ geringe Sacklängen und geringe Sacküberstände sowie einen sicheren Betrieb zu ermöglichen.

Wenn der offene Sack 2 mit der vorgesehenen Menge gefüllt ist und die Winkelposition der Abnahmeeinrichtung 42 als Handlingeinrichtung 40 erreicht, wird der offene Sack 2 von dem Füllstutzen 4 abgenommen. Die Abnahme des offenen Sacks 2 von dem Füllstutzen erfolgt während der kontinuierlichen Drehung der Packmaschine 1. Der abgenommene Sack 2 wird durch die Abnahmeeinrichtung 42, die ebenfalls rotierbar ausgeführt ist, an die Verarbeitungseinrichtung 41 übergeben, die eine Linearführung 21 und eine oder mehrere Verschließeinrichtungen 20 umfasst. Durch die wenigstens eine Verschließeinrichtung 20 wird das oben offene Ende des Offensacks 2 verschlossen. Auch bei der Abnahme wird jederzeit gewährleistet, dass der offene Sack 2 zu jedem Zeitpunkt definiert gehalten und geführt wird, sodass ein definierter Verschluss der Offensäcke 2 gewährleistet werden kann.

Ein Schutzzaun 33 kann vorgesehen sein, damit ein Betreten des Gefahrenbereichs verhindert wird.

Die rotierbare Packmaschine 1 wird bevorzugt an einem Gestell 30 hängend gelagert, wobei Träger 31 die rotierbare Packmaschine halten. Im oberen Bereich des rotierenden Teils kann ein Silo 32 zur Zwischenlagerung von Produkt vorgesehen sein.

Im Folgenden wird das Anhängen der offenen Säcke 2 näher beschrieben.

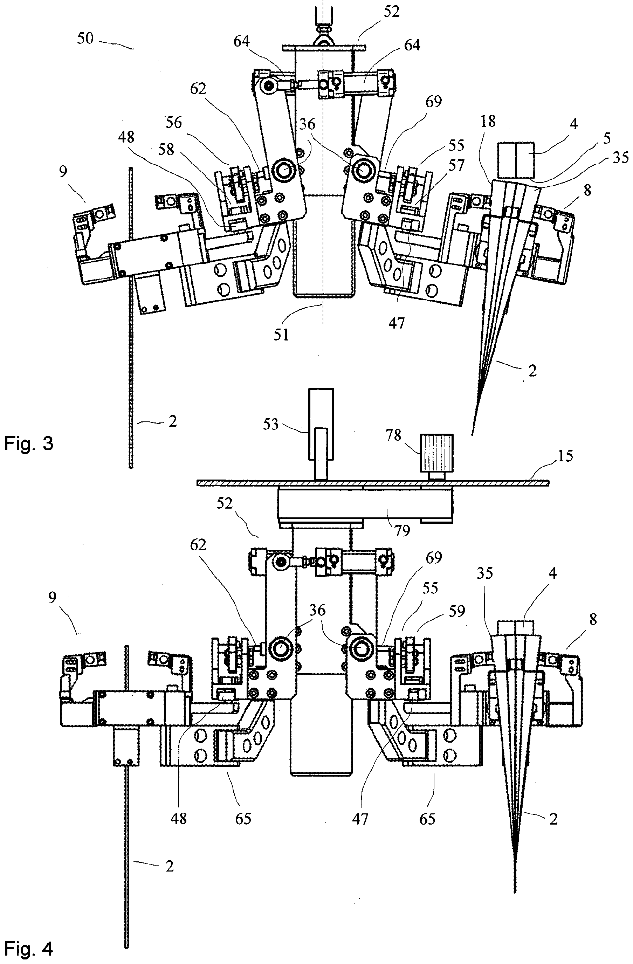

Figur 3 zeigt eine stark schematisierte Seitenansicht der Handlingeinrichtung 50 als Übergabeeinrichtung 6 und einen Füllstutzen 4 der Packmaschine 1. Der besseren Übersichtlichkeit halber sind nicht alle Komponenten dargestellt.

Von der Packmaschine 1 ist in Fig. 3 nur ein einzelner Füllstutzen 4 zu sehen. Die Handlingeinheit 50 ist hier als Übergabeeinrichtung 6 ausgeführt. Die Handlingeinrichtung 50 ist insgesamt an einem in Fig. 3 nicht dargestellten Gestell aufhängt und verfügt über eine Dreheinrichtung 52, an der hier genau zwei Greifarme 8 und 9 angeordnet sind. Die Greifarme 8 und 9 rotieren bei der Drehung der Dreheinrichtung 52 zusammen mit der Dreheinrichtung 52 mit.

Zusätzlich sind die Greifarme 8 und 9 separat voneinander entlang von Längsführungen 57 und 58 bewegbar angeordnet. Dabei werden die Greifarme 8 und 9 über Bewegungseinrichtungen 55 und 56 entlang der Längsführungen 57 und 58 bewegt. Jede Bewegungseinrichtung 55 und 56 umfasst hier einen Riemenantrieb 59. Über eine kontrollierte Drehung der Riemenantriebe 59 kann der jeweilige Greifarm 8, 9 definiert in Längsrichtung 37 bewegt werden.

In der in Fig. 3 dargestellten Position sind die Greifarme 8 und 9 in einer abgesenkten Position dargestellt, in der sie um die Schwenkachsen 36 nach unten geschwenkt sind. Die Schwenkbewegung wird über zwei separate Schwenkzylinder 64 gesteuert. Der Greifarm 9 befindet sich kurz vor der Übernahme eines neuen zu füllenden offenen Sacks 2, der von einer in Fig. 3 nicht dargestellten Sackanreicheinheit 14 dem Greifarm 9 übergeben wird. Dabei ist es möglich, dass an der Sackanreicheinheit 14 eine Sacköffnungseinrichtung 13 vorgesehen ist. Es ist aber auch möglich, dass die Sacköffnung an der Übergabeeinrichtung 6 als Handlingeinrichtung 50 erfolgt.

In der in Fig. 3 dargestellten Position wird an dem Greifarm 8 ein geöffneter Sack 2 gehalten, der mit seiner Sacköffnung 35 an einen Füllstutzen 4 einer rotierbaren Packmaschine 1 angehängt werden kann. Dabei wird der offene Sack 2 von unten durch eine Aufwärtsbewegung über die Füllöffnung 5 des Füllstutzens 4 nach oben bewegt, sodass sich die in Fig. 4 dargestellte angehängte Situation ergibt. Zusätzlich wird der Greifarm 8 beim Anhängen in Längsrichtung verfahren, sodass der Greifarm 8 mit der Sacköffnung 35 des offenen Sacks 2 sich über einen erheblichen Winkelabschnitt hier exakt unterhalb des Füllstutzens 4 der rotierbaren Packmaschine 1 befindet. Dadurch steht bei dem Hochschwenken des Greifarms 8 über den Schwenkzylinder 64 genügend Zeit zur Verfügung, um eine optimale Übergabe des offenen Sacks 2 an den Füllstutzen 4 zu gewährleisten.

Beim Verfahren des Greifarms 8 in Längsrichtung wird der Greifarm durch zwei Rollen 47 in der Längsführung 57 geführt. Die beiden Rollen sind hintereinander angeordnet und verhindern eine Drehung des Greifarms 8 relativ zu der Längsführung 57 und sorgt außerdem für eine parallele Ausrichtung des Greifarms 8 relativ zu der Längsführung 57. Die Längsführung kann linear ausgebildet sein, ist aber hier gekrümmt ausgeführt. In der Längsführung 58 des Greifarms 9 sind dementsprechend hintereinander auch zwei Rollen 48 vorgesehen, wodurch der Greifarm 9 in der Längsführung 58 geführt wird. Während der Längsbewegung rollen die Rollen 47 bzw. 48 in der jeweiligen Längsführung 57, 58 ab.

Fig. 4 zeigt die Situation, wenn die Sacköffnung 35 über den Füllstutzen 4 gestülpt wurde.

Die Schwenkarme 8 und 9 werden über Schwenkteile 65 in einer etwa horizontalen Ebene längsbeweglich gehalten.

Die Bewegungseinrichtungen 55 und 56 werden über eine gemeinsame Antriebseinrichtung 53 angetrieben. Die gesamte Handlingeinrichtung 50 wird von dem nur abschnittweise dargestellten Gestell 15 getragen, welches ortsfest angebracht sein kann. An dem Gestell 15 ist ein Motor 78 angebracht, der über einen Riemenantrieb 79 die Dreheinrichtung 52 antreibt. Die Antriebseinrichtung 53 ist drehfest an dem Gestell 15 vorgesehen. Hier ist die Antriebseinrichtung 53 als Elektrozylinder ausgeführt, der eine exakt steuerbare Ausfahrbewegung ermöglicht. Durch Ausfahren der Kolbenstange wird über eine in Fig. 4 nicht sichtbare Koppeleinrichtung 70 die Linearbewegung der Zylinderstange in eine Drehbewegung umgewandelt. Über biegsame Wellen oder Kardangelenke 62 und 69 wird die Drehung wahlweise oder automatisch gesteuert auf die Bewegungseinrichtungen 55 und 56 übertragen, wodurch eine gezielte Längsbewegung der Greifarme 8 und 9 bewirkt wird.

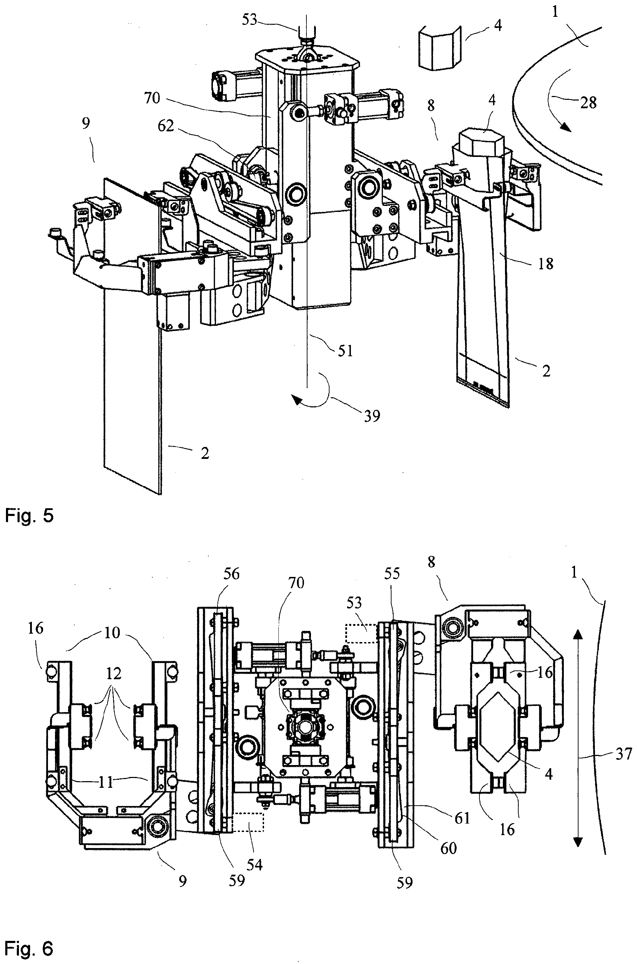

Fig. 5 zeigt eine perspektivische und stark schematische Darstellung der als Übergabeeinrichtung 6 ausgeführten Handlingeinrichtung 50 direkt nach dem Aufstecken eines offenen Sacks 2 an einen Füllstutzen 4 der rotierbaren Packmaschine 1. Damit stellt Fig. 5 eine perspektivische Darstellung der Situation gemäß Fig. 4 dar.

Erkennbar ist in Fig. 5 ein Kardangelenk 62, mit dem der Riemenantrieb 59 als Bewegungseinrichtung 56 mit einer in Fig. 5 nicht näher erkennbaren Antriebseinrichtung 53 verbunden ist. In analoger Weise ist der Greifarm 8 über ein entsprechendes Kardangelenk oder eine biegsame Welle oder dergleichen mit einer Antriebseinrichtung verbunden. Mit dem Riemenantrieb 59 der Längsführung 58 kann der Greifarm 9 in Längsrichtung 37 vor- und zurückbewegt werden. Entsprechend kann über die Bewegungseinrichtung 55 der Greifarm 8 in Längsrichtung vor- und zurückbewegt werden.

Fig. 6 zeigt eine Draufsicht auf die als Übergabeeinrichtung 6 ausgeführte Handlingeinrichtung 50 in einer ersten Position. Zur besseren Übersichtlichkeit sind in der Darstellung gemäß Fig. 6 keine offenen Säcke abgebildet.

Der Greifarm 8 befindet sich direkt unterhalb eines Füllstutzens 4. Der Greifarm 9 befindet sich in der passenden Position, um einen neuen Sack von einer Sackanreicheinheit zu übernehmen.

Dabei können die zu füllenden offenen Säcke 2 in einer vorgelagerten Sackbildungseinrichtung angefertigt werden, sodass jederzeit offene Säcke 2 mit genau abgestimmten Sackabmessungen zur Verfügung stehen.

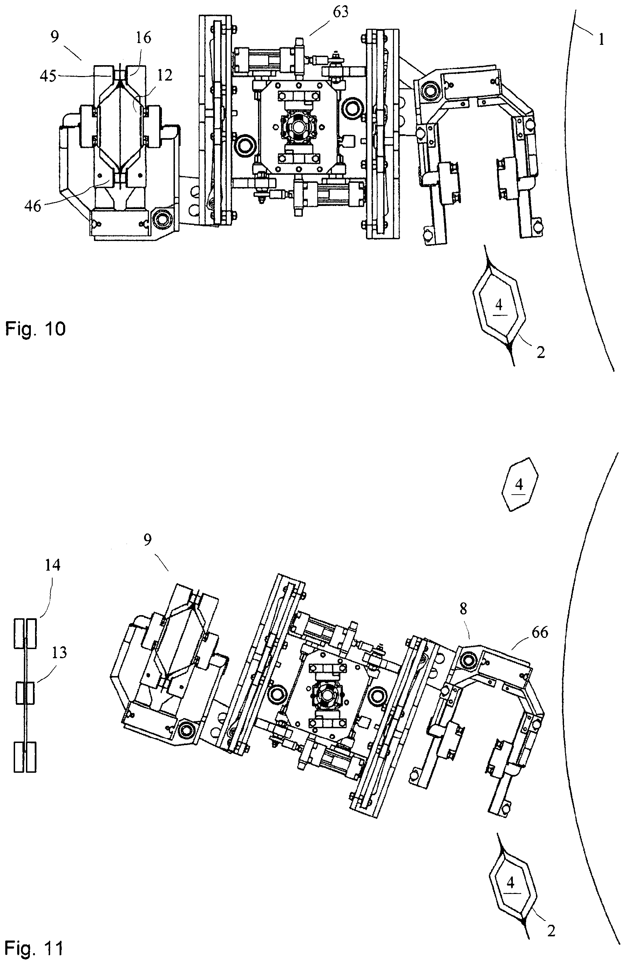

Jeder Greifarm 8, 9 verfügt über Halteeinheiten 10 und 11, die dazu bestimmt sind, einen offenen Sack 2 an voneinander beabstandeten Orten 45, 46 (Fig. 10) bzw. Stellen zu ergreifen, sodass eine räumlich definierte Übergabe der offenen Säcke 2 ermöglicht wird. Jede Halteeinheit 10, 11 verfügt über jeweils wenigstens ein Paar von Halteelementen. Beispielsweise kann ein Greiferpaar mit zwei Greifern oder ein Klemmbackenpaar mit zwei oder mehr Klemmbacken 16 vorgesehen sein, mit der eine Halteeinheit 10 den offenen Sack 2 an einem Ort 45, 46 hält.

Es ist möglich, dass für jeden Greifarm 8, 9 eine separate Antriebseinrichtung 53, 54 vorgesehen ist. Dann dient beispielsweise die Antriebseinrichtung 53 zum Antrieb der Bewegungseinrichtung 55 und führt somit zu einer Drehung des Riemenantriebs 59, wodurch der Greifarm 8 in Längsrichtung 37 bewegt wird. Dabei kann der Greifarm 8 zwischen einer vorderen und einer hinteren Endstellung hin und her bewegt werden.

In entsprechender Weise kann für den Greifarm 9 eine Antriebseinrichtung 54 vorgesehen sein, mit der eine Längsbewegung des Greifarms 9 ermöglicht wird.

Alternativ dazu kann eine Koppeleinrichtung 70 vorgesehen sein, mit der eine gemeinsame Antriebseinrichtung 53 wahlweise oder nach einem vorbestimmten Muster an den einen Greifarm 8 oder den anderen Greifarm 9 oder an beide Greifarme 8,9 gekoppelt wird. In allen Fällen ist eine separate Längsbewegung der Greifarme 8, 9 unabhängig voneinander möglich.

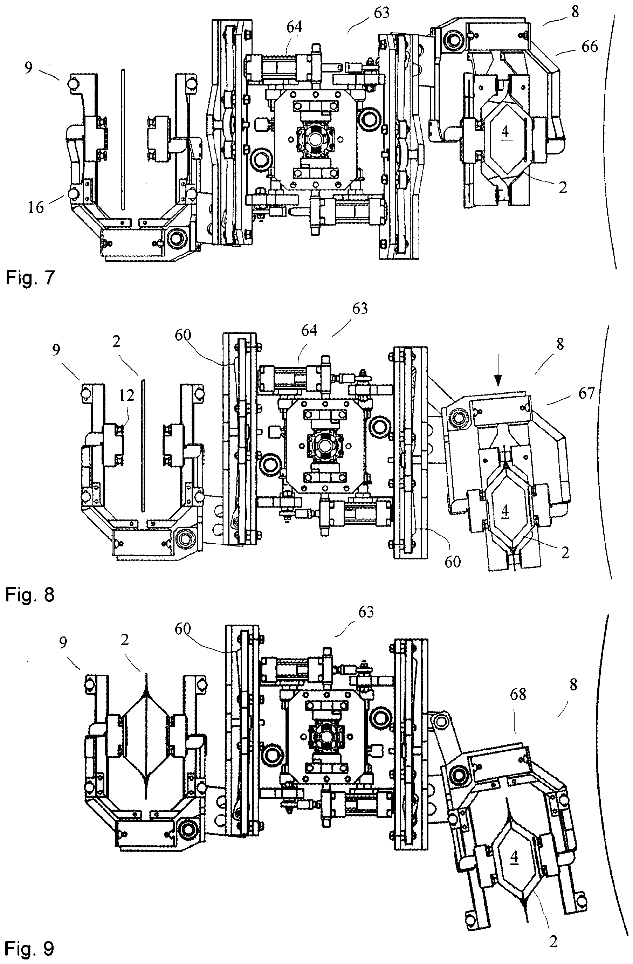

Fig. 7 zeigt die Handlingeinrichtung 50, wobei der von dem Greifarm 8 gehaltene offene Sack 2 kurz vor der Übergabe an den Füllstutzen 4 steht. Der geöffnete Offensack 2 befindet sich direkt unterhalb des Füllstutzens 4 in einer nach unten geschwenkten Stellung, so wie es Fig. 3 darstellt. In dieser Winkelposition 63 wird der Greifarm in Längsrichtung 37 beschleunigt, sodass der Greifarm 8 mit der Sacköffnung 35 jederzeit unterhalb des Füllstutzens 4 verbleibt. Gleichzeitig wird durch die Kurvenführung 60 bei der Längsbewegung ein Mitschwenken des Greifarms 8 bewirkt, sodass der Greifarm unterhalb des Füllstutzens 4 entsprechend der Rotationsbewegung des Füllstutzens 4 mit verschwenkt wird. Der Greifarm 8 ist dadurch jederzeit tangential zu der Packmaschine ausgerichtet. Bei der Bewegung des Greifarms 8 von der hinteren Stellung 66 (vgl. Fig. 7) über die Zwischenstellung 67 (vgl. Fig. 8) in die vordere Stellung 68 (vgl. Fig. 9) verbleibt der andere Greifarm 9 ortsfest. Gleichzeitig bekommt der Greifarm 9 den nächsten zu übergebenden offenen Sack 2 überreicht. Dabei kann die Öffnung 35 des Offensacks 2 durch eine separate Sacköffnungseinrichtung erfolgen oder aber die Öffnung erfolgt an dem Greifarm 9.

In Fig. 9 ist der offene Sack 2 schließlich an dem Füllstutzen 4 angehangen.

Anschließend wird, wie in Fig. 10 dargestellt, der Greifarm 8 wieder aus der vorderen Stellung 68 über die Zwischenstellung 67 in die hintere Stellung 66 zurückbewegt, um bei der Weiterrotation der Handlingeinrichtung 50 in Drehrichtung 39 im Uhrzeigersinn eine Kollision des Greifarms 8 mit dem Füllstutzen 4, an den gerade zuvor der Offensack 2 angehangen wurde, zu verhindern. Außerdem muss der Greifarm 8 wieder in die Grundposition zurückgefahren werden, bevor der Greifarm 8 den nächsten offenen Sack 2 anhängt.

Dadurch, dass der Greifarm 8 wieder in Längsrichtung aus der vorderen Stellung 68 in die hintere Stellung 66 verfahren wird, bevor die Handlingeinrichtung 50 weiter rotiert, kann eine höhere Taktrate erzielt werden.

Wie aus Fig. 11 ersichtlich, funktioniert in der Position nach Fig. 11 eine Weiterrotation der Handlingeinrichtung 50 ohne Kollision mit dem Füllstutzen 4 oder dem daran angehängten Offensack 2, da sich der Greifarm 8 wieder in der hinteren Stellung 66 befindet.

Auf der anderen Seite hatte der Greifarm 9 genügend Zeit zur Verfügung, um den nächsten Offensack 2 definiert von der Sackanreicheinheit 13 zu übernehmen und gegebenenfalls zu öffnen. Hier ist der offene Sack durch die vorgeschaltete Sacköffnungseinrichtung 13 vorgeöffnet. Dadurch kann eine jederzeit eindeutig definierte Führung der Offensäcke gewährleistet werden.

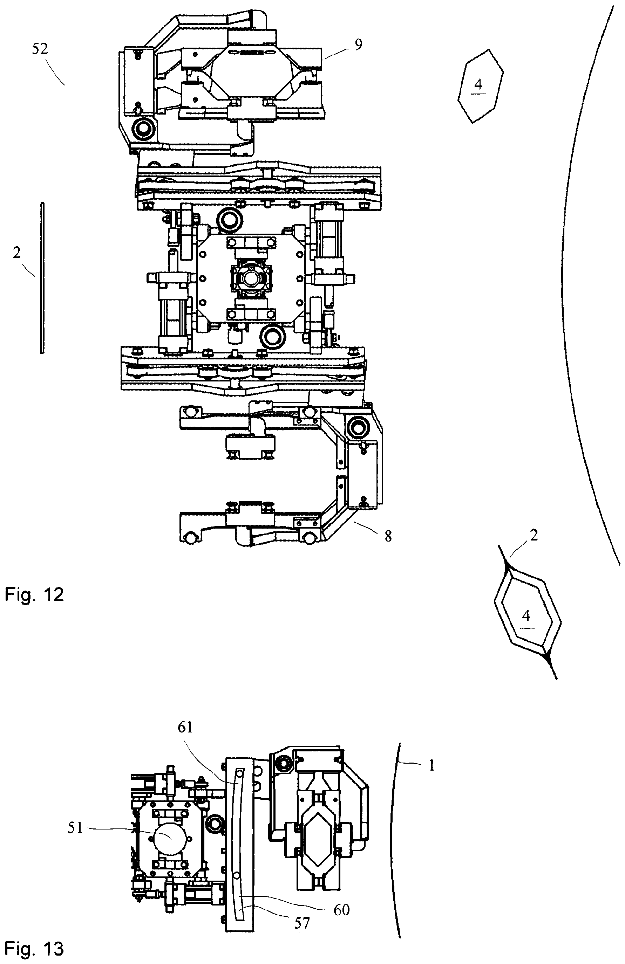

Fig. 12 zeigt eine um 90° gedrehte Winkelposition, in der nun der Greifarm 9 auf die Übergabe des Offensacks 2 an den nächsten Füllstutzen 4 wartet.

Fig. 13 zeigt eine partielle Draufsicht auf die Handlingeinrichtung 50, wobei die Kurvenführung 60 als Längsführung 57 des Greifarms 8 sichtbar ist. Die Kurvenführung 60 weist den Verlauf eines Kreisbogens 61 auf, dessen Mittelpunkt der Drehachse der rotierbaren Packmaschine 1 entspricht oder aber nahe zu der Drehachse 44 der rotierbaren Packmaschine 1 angeordnet ist.

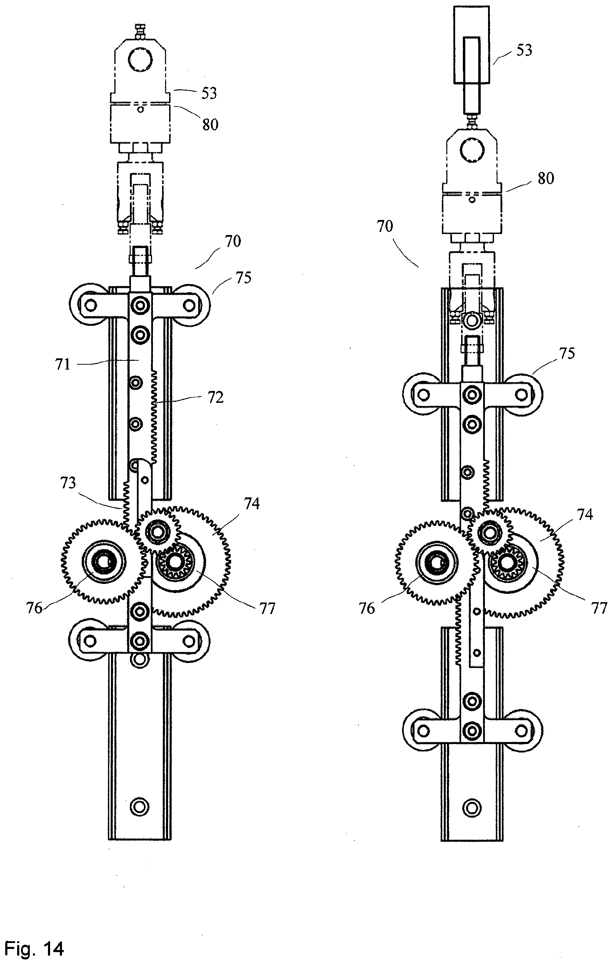

Fig. 14 zeigt die Funktion der Koppeleinrichtung 70, die die Linearbewegung der Antriebseinrichtung 53 in Drehbewegungen umsetzt. Dabei verfügt die Koppeleinrichtung 70 über eine Zahnstange 71 auf der auf beiden Seiten Verzahnungen 72 und 73 vorgesehen sind. Die Verzahnung 72 ist zur Längsverstellung der Bewegungseinrichtung des Greifarms 8 vorgesehen. Mit der Verzahnung 73 wird über die Drehung der Zahnräder 74 eine Längsbewegung des Greifarms 9 bewirkt. Über eine geeignete Anordnung der Verzahnungen 72 und 73 ist es möglich, dass unabhängig voneinander sowohl der eine Greifarm 8 als auch der andere Greifarm 9 in Längsrichtung 37 verstellt wird. Dabei wird in vorteilhafter Weise eine Drehbewegung über die Riemenantriebe 59 in jeweilige Längsbewegungen der beiden Greifarme 8, 9 übertragen. Geeignete Sperreinrichtungen können vorgesehen sein, die eine unbeabsichtigte Drehung der Antriebswellen 76, 77 auf der Seite zuverlässig verhindern, auf deren Seite die Verzahnung nicht im Eingriff ist und folglich auch nicht verfahren soll.

Führungsrollen 75 dienen zur Führung, sodass die Zahnstange 71 und somit deren Verzahnungen 72 und 73 definiert in Bezug auf die Zahnräder 74 gehalten wird bzw. werden. Die Zahnstange 71 ist in einem zentralen Bereich der Drehachse 51 der Dreheinrichtung 52 angeordnet. Die Antriebseinrichtung 53 ist über ein Drehgelenk 80 angekoppelt. Durch das Drehgelenk 80 wird es ermöglicht, dass sich die Koppeleinrichtung 70 und auch die Dreheinrichtung 52 dreht, während die Antriebseinrichtung 53 ortsfest angeordnet ist.

Durch den Einsatz der Koppeleinrichtung 70 kann in vorteilhafter Weise ein einfacher Aufbau erreicht werden, bei dem für die Längsbewegung der beiden Greifarme 8, 9 an der Dreheinrichtung 52 nur ein gemeinsamer Antrieb 53 nötig ist. Durch eine Längsverschiebung der Zahnstange 71 wird - je nach Position der Zahnstange 71 in Bezug auf die Zahnräder 74 - eine genau abgestimmte Drehbewegung der Riemenantriebe 59 der beiden Greifarme ermöglicht, wobei eine mit der Rotationsgeschwindigkeit der rotierenden Packmaschine synchronisierte Bewegung erfolgt. Die Abtriebswelle 76 ist über eine biegsame Welle oder ein Kardangelenk 69 mit der Bewegungseinrichtung 55 gekoppelt, sodass bei Eingriff des entsprechenden Zahnrades in die Zahnstange eine Längsbewegung der Antriebseinrichtung 53 in eine Drehbewegung der Abtriebswelle 76 und somit eine Drehbewegung der Bewegungseinrichtung 55 umgesetzt wird, die dann für eine Längsbewegung des Greifarms 8 sorgt. In analoger Weise kann auch eine Längsbewegung der Antriebseinrichtung 53 in eine Längsbewegung des Greifarms 9 umgesetzt werden.

Insgesamt stellt die Erfindung eine Vorrichtung 100 mit einer Handlingeinrichtung 50 und/oder 40 und gegebenenfalls einer rotierenden Packmaschine 1 zur Verfügung, womit ein hoher Durchsatz ermöglicht wird.

**Bezugszeichenliste:**

| | | | |
|---|---|---|---|
| 1 | Rotierbare Packmaschine | 46 | Ort |
| 2 | offener Sack | 47 | Rollen |
| 3 | Fülleinheit | 48 | Rollen |
| 4 | Füllstutzen | 50 | Handlingeinrichtung |
| 5 | Füllöffnung | 51 | Drehachse von 52 |
| 6 | Übergabeeinrichtung | 52 | Dreheinrichtung |
| 8 | Greifarm | 53 | Antriebseinrichtung |
| 9 | Greifarm | 54 | Antriebseinrichtung |
| 10 | Halteeinheit,Greifeinheit | 55 | Bewegungseinrichtung |
| 11 | Halteeinheit,Greifeinheit | 56 | Bewegungseinrichtung |
| 12 | Sauger | 57 | Längsführung |
| 13 | Sacköffnungseinrichtung | 58 | Längsführung |
| 14 | Sackanreicheinheit | 59 | Riemenantrieb |
| 15 | Gestell | 60 | Kurvenführung |
| 16 | Klemmbacke | 61 | Kreisbogen |
| 18 | Sackwandung | 62 | Kardangelenk |
| 19 | Verdichtungseinrichtung | 63 | Winkelposition |
| 20 | Verschließeinrichtung | 64 | Schwenkzylinder |
| 21 | Linearführung | 65 | Schwenkteil |
| 26 | Sackbildungseinrichtung | 66 | hintere Stellung |
| 28 | Drehrichtung von 1 | 67 | Zwischenstellung |
| 29 | Einlauftrichter | 68 | vordere Stellung |
| 30 | Gestell | 69 | Kardangelenk |
| 31 | Träger | 70 | Koppeleinrichtung |
| 32 | Silo | 71 | Zahnstange |
| 33 | Schutzzaun | 72 | Verzahnung |
| 35 | Sacköffnung | 73 | Verzahnung |
| 36 | Schwenkachse | 74 | Zahnrad |
| 37 | Längsrichtung | 75 | Führungsrolle |
| 39 | Drehrichtung von 50 | 76 | Abtriebswelle für 55 |
| 40 | Handlingeinrichtung | 77 | Abtriebswelle für 56 |
| 41 | Verarbeitungseinrichtung | 78 | Motor |
| 42 | Abnahmeeinrichtung | 79 | Antriebsriemen |
| 43 | Rüttelflasche | 80 | Drehgelenk |
| 44 | Drehachse von 1 | 100 | Vorrichtung |
| 45 | Ort | | |

## Patentansprüche

1. Vorrichtung (100) zum Verarbeiten von offenen Säcken (2) umfassend eine Handlingeinrichtung (50), um offene Säcke (2) mit einer rotierbaren Packmaschine (1) auszutauschen, wobei die Handlingeinrichtung (50) wenigstens eine um eine Drehachse (51) der Handlingeinrichtung (50) umlaufende Dreheinrichtung (52) aufweist, an der wenigstens zwei Greifarme (8, 9) zum Greifen der offenen Säcke (2) angeordnet sind, **dadurch gekennzeichnet, dass** wenigstens zwei Greifarme (8,9) getrennt voneinander und im Wesentlichen quer zu der Drehachse (51) der Dreheinrichtung (52) längsbeweglich angeordnet sind, um zusätzlich zu der Umlaufbewegung um die Handlingeinrichtung (50) herum eine Längsbewegung der Greifarme (8, 9) gegenüber der Dreheinrichtung (52) zu ermöglichen.

2. Vorrichtung (100) nach dem vorhergehenden Anspruch, wobei wenigstens eine Antriebseinrichtung (53) für die Längsbewegung wenigstens eines Greifarmes (8,9) und insbesondere wenigstens zweier Greifarme (8,9) vorgesehen ist.

3. Vorrichtung (100) nach dem vorhergehenden Anspruch, wobei die Antriebseinrichtung (53) über wenigstens eine Koppeleinrichtung (70) an wenigstens eine Bewegungseinrichtung (55, 56) zur Längsbewegung des Greifarmes (8, 9) ankoppelbar ist und wobei insbesondere die Koppeleinrichtung (70) dazu ausgebildet ist, die Antriebseinrichtung (53) an wenigstens zwei unterschiedliche Bewegungseinrichtungen (55, 56) anzukoppeln und wobei vorzugsweise wenigstens eine Bewegungseinrichtung (55, 56) einen Riemenantrieb (59) umfasst.

4. Vorrichtung (100) nach einem der vorhergehenden Ansprüche, wobei wenigstens zwei separate Längsführungen (57, 58) an der Dreheinrichtung (52) vorgesehen sind, denen jeweils ein Greifarm (8,9) zugeordnet ist.

5. Vorrichtung (100) nach einem der vorhergehenden Ansprüche, wobei wenigstens eine Längsführung (57, 58) eine Kurvenführung (60) umfasst, an welcher der Greifarm (8, 9) längsbeweglich geführt wird und wobei insbesondere ein Verlauf der Kurvenführung (60) im Wesentlichen einem Kreisbogen (61) entspricht, dessen Mittelpunkt im Wesentlichen einer Drehachse (44) der rotierbaren Packmaschine (1) entspricht.

6. Vorrichtung (100) nach einem der vorhergehenden Ansprüche, wobei wenigstens ein Greifarm (8, 9) über wenigstens zwei Halteeinheiten (10, 11) verfügt, um die offenen Säcke jeweils an zwei voneinander beabstandeten Orten (45, 46) des offenen Sacks (2) zu halten.

7. Vorrichtung (100) nach einem der vorhergehenden Ansprüche, umfassend eine rotierbare Packmaschine (1) zum Füllen von offenen Säcken (2) mit mehreren über dem Umfang verteilt angeordneten mitrotierenden Fülleinheiten (3), die jeweils einen Füllstutzen (4) mit einer unteren Füllöffnung (5) aufweisen, wobei durch eine relativ zum Füllstutzen (4) gerichtete Aufwärtsbewegung die offenen Säcke (2) anhängbar sind.

8. Vorrichtung (100) nach dem vorhergehenden Anspruch, wobei eine Längsgeschwindigkeit der Längsbewegung des Greifarms (8,9) wenigstens zeitweise an eine Umfangsgeschwindigkeit der Umfangsbewegung der Füllstutzen (4) angepasst ist und wobei der Greifarm (8,9) wenigstens abschnittsweise linear und/oder bogenförmig bewegbar an der Handlingeinrichtung (50) angeordnet ist.

9. Vorrichtung (100) nach einem der beiden vorhergehenden Ansprüche, wobei die Handlingeinrichtung (50) und die rotierbare Packmaschine (1) gegensinnig rotieren.

10. Vorrichtung (100) nach einem der drei vorhergehenden Ansprüche, wobei eine Handlingeinrichtung (50) zur Übergabe zu füllender offener Säcke (2) an die rotierbare Packmaschine (1) vorgesehen ist und wobei wenigstens eine Sacköffnungseinrichtung (13) vorgesehen ist.

11. Vorrichtung (6) nach dem vorhergehenden Anspruch, wobei die Sacköffnungseinrichtung (13) der Handlingeinrichtung (50) vorgelagert ist und den geöffneten offenen Sack (2) der Handlingeinrichtung (50) übergibt und/oder wobei wenigstens eine Sacköffnungseinrichtung (13) mitrotierend an der Handlingeinrichtung (50) und insbesondere der Dreheinrichtung (6) vorgesehen ist.

12. Vorrichtung (100) nach einem der fünf vorhergehenden Ansprüche, wobei eine Handlingeinrichtung (40) zur Abnahme gefüllter offener Säcke von der rotierbaren Packmaschine (1) vorgesehen ist.

13. Vorrichtung (100) nach einem der sechs vorhergehenden Ansprüche, wobei eine Drehung der Dreheinrichtung (52) getaktet erfolgt und/oder wobei eine Drehung der rotierbaren Packmaschine (1) kontinuierlich erfolgt und/oder wobei die Drehbewegungen der Dreheinrichtung (52) und der rotierbaren Packmaschine (1) synchronisiert sind.

14. Vorrichtung (100) nach einem der sieben vorhergehenden Ansprüche, wobei wenigstens ein Greifarm (8, 9) höhenbeweglich vorgesehen ist und/oder wobei der Füllstutzen (4) zum Anhängen höhenverstellbar ist.

15. Vorrichtung (100) nach Anspruch 6, wobei die Halteeinheit (10, 11) wenigstens eines Greifarms (8, 9) durch eine Höhenverschwenkung des Greifarms (8, 9) höhenverstellbar ist.

## Claims

1. Apparatus (100) for processing open-mouth bags (2) comprising a handling device (50) for exchanging open-mouth bags (2) with a rotary packaging machine (1), the handling device (50) comprising at least one rotating device (52) circulating around a rotation axis (51) of the handling device (50) where at least two gripping arms (8, 9) are disposed for gripping the open-mouth bags (2), **characterized in that** at least two gripping arms (8, 9) are disposed separately from one another for longitudinal movement substantially transverse to the rotation axis (51) of the rotating device (52) to allow, in addition to the circulating motion around the handling device (50), longitudinal movement of the gripping arms (8, 9) relative to the rotating device (52).

2. The apparatus (100) according to the preceding claim wherein at least one driving device (53) is provided for the longitudinal movement of at least one of the gripping arms (8, 9) and in particular of at least two gripping arms (8, 9).

3. The apparatus (100) according to the preceding claim wherein the driving device (53) can be coupled to at least one movement device (55, 56) via at least one coupling device (70) for longitudinal movement of the gripping arm (8, 9), and wherein in particular the coupling device (70) is configured to couple the driving device (53) to at least two different movement devices (55, 56), and wherein preferably at least one movement device (55, 56) comprises a belt drive (59).

4. The apparatus (100) according to any of the preceding claims wherein at least two separate longitudinal guides (57, 58) are provided on the rotating device (52) to which one gripping arm (8, 9) each is assigned.

5. The apparatus (100) according to any of the preceding claims wherein at least one longitudinal guide (57, 58) comprises a curved guide (60) in which the gripping arm (8, 9) is guided for longitudinal movement and wherein in particular a path of the curved guide (60) substantially corresponds to a circular arc (61) whose center substantially corresponds to a rotation axis (44) of the rotary packaging machine (1).

6. The apparatus (100) according to any of the preceding claims wherein at least one gripping arm (8, 9) comprises at least two holding units (10, 11) to hold each of the open-mouth bags in two spaced-apart places (45, 46) of the open-mouth bag (2).

7. The apparatus (100) according to any of the preceding claims comprising a rotary packaging machine (1) for filling open-mouth bags (2) having multiple filling units (3) disposed over the circumference and rotating along, each of which having a filling spout (4) with a bottom filling opening (5) wherein the open-mouth bags (2) can be appended by way of upwardly movement relative to the filling spout (4).

8. The apparatus (100) according to the preceding claim wherein a longitudinal speed of the longitudinal movement of the gripping arm (8, 9) is at least temporarily matched to a peripheral speed of the peripheral movement of the filling spouts (4) and wherein the gripping arm (8, 9) is disposed on the handling device (50) for linear and/or arcuate movement at least in sections.

9. The apparatus (100) according to any of the two preceding claims wherein the handling device (50) and the rotary packaging machine (1) rotate in opposite senses.

10. The apparatus (100) according to any of the three preceding claims wherein a handling device (50) is provided for transferring open-mouth bags (2) intended for filling to the rotary packaging machine (1) and wherein at least one bag opener (13) is provided.

11. The apparatus (6) according to the preceding claim wherein the bag opener (13) is disposed upstream of the handling device (50) and transfers the opened open-mouth bag (2) to the handling device (50) and/or wherein at least one bag opener (13) is provided for rotating along on the handling device (50) and in particular on the rotating device (6).

12. The apparatus (100) according to any of the five preceding claims wherein a handling device (40) is provided for discharging filled open-mouth bags from the rotary packaging machine (1).

13. The apparatus (100) according to any of the six preceding claims wherein the rotating device (52) rotates indexed and/or wherein the rotary packaging machine (1) rotates continuously and/or wherein the rotational movements of the rotating device (52) and of the rotary packaging machine (1) are synchronized.

14. The apparatus (100) according to any of the seven preceding claims wherein at least one gripping arm (8, 9) is provided height-adjustable and/or wherein the filling spout (4) is height-adjustable for appending.

15. The apparatus (100) according to claim 6 wherein the holding unit (10, 11) of at least one gripping arm (8, 9) is height-adjustable by swivelling the gripping arm (8, 9) up and down.

## Revendications

1. Dispositif (100) pour le traitement de sacs ouverts (2), comprenant un dispositif de manipulation (50) pour échanger des sacs ouverts (2) avec une machine d'emballage (1) rotative, dans lequel ledit dispositif de manipulation (50) présente au moins un dispositif de rotation (52) qui tourne autour d'un axe de rotation (51) du dispositif de manipulation (50) et sur lequel sont disposés au moins deux bras de préhension (8, 9) destinés à saisir les sacs ouverts (2), **caractérisé par le fait qu'**au moins deux bras de préhension (8, 9) sont disposés de manière longitudinalement déplaçable les uns séparément des autres et pour l'essentiel transversalement à l'axe de rotation (51) du dispositif de rotation (52) afin de permettre, en plus du mouvement de rotation autour du dispositif de manipulation (50), un déplacement longitudinal des bras de préhension (8, 9) par rapport au dispositif de rotation (52).

2. Dispositif (100) selon la revendication précédente, dans lequel au moins un dispositif d'entraînement (53) pour le déplacement longitudinal d'au moins un bras de préhension (8, 9) et en particulier d'au moins deux bras de préhension (8, 9) est prévu.

3. Dispositif (100) selon la revendication précédente, dans lequel ledit dispositif d'entraînement (53) peut être accouplé par l'intermédiaire d'au moins un dispositif d'accouplement (70) à au moins un dispositif de déplacement (55, 56) pour le déplacement longitudinal du bras de préhension (8, 9), et dans lequel, en particulier, ledit dispositif d'accouplement (70) est configuré pour accoupler le dispositif d'entraînement (53) à au moins deux dispositifs de déplacement (55, 56) différents, et dans lequel, de préférence, au moins un dispositif de déplacement (55, 56) comprend une commande à courroie (59).

4. Dispositif (100) selon l'une quelconque des revendications précédentes, dans lequel au moins deux guidages longitudinaux (57, 58) séparés sont prévus sur le dispositif de rotation (52) à chacun d'eux est associé un bras de préhension (8, 9).

5. Dispositif (100) selon l'une quelconque des revendications précédentes, dans lequel au moins un guidage longitudinal (57, 58) comprend un guide courbe (60) sur lequel le bras de préhension (8, 9) est guidé de manière longitudinalement déplaçable, et dans lequel, en particulier, une allure du guide courbe (60) correspond pour l'essentiel à un arc de cercle (61) dont le centre correspond pour l'essentiel à un axe de rotation (44) de la machine d'emballage (1) rotative.

6. Dispositif (100) selon l'une quelconque des revendications précédentes, dans lequel au moins un bras de préhension (8, 9) dispose d'au moins deux unités de maintien (10, 11) afin de maintenir les sacs ouverts respectivement sur deux endroits (45, 46) du sac ouvert (2), qui sont espacés l'un de l'autre.

7. Dispositif (100) selon l'une quelconque des revendications précédentes, comprenant une machine d'emballage (1) rotative destinée à remplir des sacs ouverts (2) par l'intermédiaire d'une pluralité d'unités de remplissage (3) co-rotatives qui sont disposées de manière à être réparties sur la circonférence et qui présentent chacune une tubulure de remplissage (4) ayant une ouverture inférieure de remplissage (5), dans lequel les sacs ouverts (2) peuvent être accrochés par un mouvement ascendant dirigé par rapport à la tubulure de remplissage (4).

8. Dispositif (100) selon la revendication précédente, dans lequel une vitesse longitudinale du déplacement longitudinal du bras de préhension (8, 9) est adaptée au moins temporairement à une vitesse circonférentielle du mouvement circonférentiel des tubulures de remplissage (4), et dans lequel le bras de préhension (8, 9) est disposé sur le dispositif de manipulation (50) de manière à pouvoir être déplacé, au moins par sections, linéairement et/ou en arc.

9. Dispositif (100) selon l'une quelconque des deux revendications précédentes, dans lequel le dispositif de manipulation (50) et la machine d'emballage (1) rotative tournent dans des directions opposées.

10. Dispositif (100) selon l'une quelconque des trois revendications précédentes, dans lequel un dispositif de manipulation (50) destiné à transférer, à la machine d'emballage (1) rotative, des sacs ouverts (2) à remplir est prévu et dans lequel au moins un dispositif à ouvrir les sacs (13) est prévu.

11. Dispositif (100) selon la revendication précédente, dans lequel ledit dispositif à ouvrir les sacs (13) est disposé en amont du dispositif de manipulation (50) et transfère le sac ouvert (2) qui a été ouvert au dispositif de manipulation (50) et/ou dans lequel au moins un dispositif à ouvrir les sacs (13) est prévu de manière co-rotative sur le dispositif de manipulation (50) et en particulier sur le dispositif de rotation (6).

12. Dispositif (100) selon l'une quelconque des cinq revendications précédentes, dans lequel un dispositif de manipulation (40) destiné à détacher des sacs ouverts remplis de la machine d'emballage (1) rotative est prévu.

13. Dispositif (100) selon l'une quelconque des six revendications précédentes, dans lequel une rotation du dispositif de rotation (52) se fait de manière cadencée et/ou dans lequel une rotation de la machine d'emballage (1) rotative est réalisée de manière continue et/ou dans lequel les mouvements de rotation du dispositif de rotation (52) et de la machine d'emballage (1) rotative sont synchronisés.

14. Dispositif (100) selon l'une quelconque des sept revendications précédentes, dans lequel au moins un bras de préhension (8, 9) est prévu de manière à être déplaçable en hauteur et/ou dans lequel la tubulure de remplissage (4) est réglable en hauteur pour l'accrochage.

15. Dispositif (100) selon la revendication 6, dans lequel ladite unité de maintien (10, 11) d'au moins un bras de préhension (8, 9) est réglable en hauteur par un pivotement en hauteur du bras de préhension (8, 9).
